Europäisches Patentamt

European Patent Office

Office européen des brevets

(11) Veröffentlichungsnummer: **0 189 149**
A2

## (12) EUROPÄISCHE PATENTANMELDUNG

(21) Anmeldenummer: 86100613.8

(22) Anmeldetag: 17.01.86

(51) Int. Cl.⁴: **G 01 F 11/20**

(30) Priorität: 25.01.85 DE 3502429

(71) Anmelder: **Henkel Kommanditgesellschaft auf Aktien, Postfach 1100 Henkelstrasse 67, D-4000 Düsseldorf-Holthausen (DE)**

(43) Veröffentlichungstag der Anmeldung: 30.07.86 Patentblatt 86/31

(84) Benannte Vertragsstaaten: **AT BE CH DE FR GB IT LI NL**

(72) Erfinder: **Vierkötter, Peter, Sperberweg 7, D-5090 Leverkusen 3 (DE)**

(54) **Dosiergerät mit zylindrischem Gehäuse und darin drehbar gelagerter Dosierkammer.**

(57) Ein an einen Flüssigkeitsbehälter (24) anzukoppelndes Dosiergerät kann aus einem zylindrischen Gehäuse (1) und einer drehbar darin gelagerten Dosierkammer (15) bestehen. Eine weitgehend vollständige Ausnutzung des Volumens des Dosiergeräts und eine lage- und stossunabhängige Dosierung wird erreicht, wenn Gehäuse (1) und Dosierkammer (15) je zwei den Zu- bzw. Ablauf bildende Löcher (5, 6, 16, 17) mit dem gleichen axialen Abstand (a) im Zylindermantel sowie ein Entlüftungsloch (3) im Gehäusedeckel (2) besitzen und wenn die Zu- und Ablauflöcher (15, 17) der Dosierkammer (15) in Umfangsrichtung gegeneinander versetzt sind.

Patentanmeldung
Henkelstr. 67
4000 Düsseldorf, den 23. 1. 1985

**Henkel** KGaA
ZR-FE/Patente
Bor/C

P a t e n t a n m e l d u n g
D 7196

"Dosiergerät mit zylindrischem Gehäuse und darin drehbar
gelagerter Dosierkammer"

Die Erfindung betrifft ein Dosiergerät zum Ankoppeln an
einen Flüssigkeitsbehälter mit einem im wesentlichen zylindrischen Gehäuse und einer darin drehbar gelagerten
Dosierkammer, ferner mit je einem Zulauf und einem Ablauf an Gehäuse und Dosierkammer, wobei die Zulauflöcher
und die Ablauflöcher durch Relativdrehung von Gehäuse und
Dosierkammer gegenläufig bzw. alternativ zu öffnen sind
und mit einer Entlüftungsöffnung an der Dosierkammer sowie mit einer Kupplung zum Ansetzen an den Flüssigkeitsbehälter.

Ein Dosiergerät dieser Art wird in dem DE-GM 82 34 790
beschrieben. Das bekannte Gerät besteht aus einer Vielzahl von Einzelteilen, die besonders in der Serienproduktion einen unverhältnismäßig hohen Aufwand bedingen. Ausserdem ist der bekannte Dosierer im Verhältnis zu seiner
Leistung sehr voluminös, da sein Dosiergehäuse etwa zur
Hälfte aus Totraum besteht. Weiterhin besitzt der bekannte Dosierer zwar ein Entlüftungsrohr, dieses dient aber
nur der Erleichterung des Entnahmevorgangs, beim Dosieren dagegen ist die Entlüftungsbohrung geschlossen. Zur
Belüftung des an den Dosierer anzuschließenden Flüssigkeitsbehälters dient ein den Behälter und den Dosierer
verbindendes Zulaufrohr. Die Dosiermenge wird durch das
durch die Oberkante des Zulaufrohrs definierte Dosierniveau vorgegeben. Die Dosiermenge ist daher erheblich lageabhängig und kann durch Stoß stark beeinflußt werden.
Das bekannte Gerät muß also beim Dosieren ruhig und immer
in der gleichen Lage gehalten werden.

...

D 7196                    2

Der Erfindung liegt die Aufgabe zugrunde, ein aus möglichst wenig Einzelteilen herzustellendes und in Serie wirtschaftlich zu montierendes Dosiergerät zu schaffen, dessen Dosiermenge durch das lageunabhängige Volumen einer Dosierkammer bestimmt wird und dessen Gerätevolumen im wesentlichen durch das Volumen der Dosierkammer ausgefüllt wird. Die erfindungsgemäße Lösung besteht für das Dosiergerät eingangs genannter Art darin, daß das einen Zylindermantel und einen dem Flüssigkeitsbehälter zugewandten Deckel umfassende Gehäuse zwei den Zu- bzw. Ablauf bildende Löcher mit axialem Abstand im Zylindermantel sowie ein eine Entlüftungsverbindung zum Flüssigkeitsbehälter bildendes Loch im Deckel besitzt, daß die einen drehbar im Gehäuse gelagerten Zylindermantel und einen den Flüssigkeitsbehälter abgewandten Boden aufweisende Dosierkammer ebenfalls zwei als Zu- bzw. Ablauf dienende Löcher mit axialem Abstand im Zylindermantel sowie ein mit dem Loch der Entlüftungsverbindung zur Deckung zu bringendes Abdeckmittel besitzt, daß Zulauf und Ablauf von Gehäuse bzw. Dosierkammer sowie die Abdichtmittel der Dosierkammer so in Umfangsrichtung gegeneinander versetzt sind, daß entweder die Zuläufe oder die Abläufe durch Relativdrehung zur Deckung zu bringen sind und beim Öffnen des Ablaufs die Entlüftungsverbindung verschlossen ist, und daß die zum Ansetzen des Gehäuses an den Flüssigkeitsbehälter dienende Kupplung einen Verbindungskanal zwischen dem Behälterinnern und dem Gehäusezulauf aufweist.

Durch die Erfindung wird ein im wesentlichen aus zwei etwa becherförmigen Einzelteilen - nämlich aus dem zylindrischen Gehäuse und der drehbar darin eingesetzten

...

D 7196                    3

Dosierkammer - bestehendes Dosiergerät mit lage- und stoßunabhängiger Dosierung geschaffen. Die beiden Teile sind lediglich zusammenzustecken, so daß die Montage ohne weiteres in eine Serienproduktion zu integrieren ist. Als drittes Einzelteil kommt eventuell ein Kupplungsmittel, z.B. eine Überwurfschraube, zum Verbinden des Dosiergeräts mit dem Flüssigkeitsbehälter in Frage. Die Montage solcher Kupplungsmittel ist in der Serienproduktion geläufig. Da schließlich die Dosierkammer das Gehäuse im wesentlichen vollständig ausfüllt, enthält das erfindungsgemäße Dosiergerät keine das Gesamtvolumen unnötig vergrößernde Toträume.

Um eine Verbindung zwischen dem Innern des Flüssigkeitsbehälters und der Zulauföffnung von Gehäuse und gegebenenfalls Dosierkammer zu schaffen, wird gemäß weiterer Erfindung der Öffnungsdurchmesser der Kupplung des Flüssigkeitsbehälters wesentlich größer als der Zylinderdurchmesser des daran anzukuppelnden Gehäuses ausgebildet, derart, daß ein Verbindungskanal zwischen Flüssigkeitsbehälter und Gehäusezulauf über die Zylinderoberfläche des Gehäuses führen kann. Vorzugsweise wird das Gehäuse zu diesem Zweck exzentrisch in Bezug auf die Öffnung des Flüssigkeitsbehälters, d.h. exzentrisch in Bezug auf die Behälterkupplung, angeordnet.

Das erfindungsgemäße Dosiergerät besteht nach dem vorangehenden im wesentlichen aus zwei einseitig offenen Zylindern, also Bechern, die mit den offenen Enden ineinander zu stecken sind. Die an die Behälterkupplung angrenzende geschlossene Seite wird als Deckel, die dem Deckel gegenüberliegende geschlossene Seite als Boden bezeichnet. Die zylindrische Dosierkammer soll in dem Gehäuse drehbar gelagert werden. Hierzu ist es zweckmäßig, das Gehäuse auf

• • •

D 7196                                4

der dem Deckel axial gegenüberliegenden Seite mit einem Kupplungsmittel, insbesondere mit einem umlaufenden Schnappwulst, auszustatten, der ein drehbares Festhalten des Bodens der eingesetzten Dosierkammer aufweist. Zum Betätigen des Geräts, d.h. zum Drehen der Dosierkammer relativ zum Gehäuse, kann an den Boden der Dosierkammer ein Drehflügel angeformt werden.

Wenn die Zulauflöcher von Gehäuse und Dosierkammer des erfindungsgemäßen Dosiergeräts zur Deckung gebracht werden, wird eine Nachfüllverbindung zum Flüssigkeitsbehälter geschaffen. Der reibungslose Betrieb dieser Nachfüllverbindung setzt eine Belüftungsöffnung zum Vorratsbehälter hin voraus. Vorzugsweise enthält der Deckel an seinem Rand der Zulauföffnung des Gehäuses diametral gegenüber ein Lüftungsloch als Mittel zum Druckausgleich zwischen Flüssigkeitsbehälter und Dosierkammer. Dieses Entlüftungsloch, das das lage- und stoßunabhängige Dosieren ermöglicht, soll aber verschließbar sein für den Fall, daß die Auslauföffnungen von Dosierkammer und Behälter zur Deckung gebracht werden, um die Dosiermenge auszugießen. Vorzugsweise besitzt die Dosierkammer auf ihrer Innenfläche einen Steg, der das Entlüftungsloch im Deckel des Gehäuses zumindest in der relativen Drehstellung von Dosierkammer und Gehäuse verschließt, in der sich die Auslauföffnungen decken.

Patentanmeldung

**Henkel** KGaA
ZR-FE/Patente

D 7196                              5

Anhand der schematischen Darstellung eines Ausführungsbeispiels werden Einzelheiten der Erfindung erläutert.
Es zeigen:

Fig. 1   ein Dosiergehäuse mit Überwurfmutter zum
         Befestigen an der Mündung eines Flüssigkeitsbehälters, im Längsschnitt;
Fig. 2   eine in das Dosiergehäuse nach Fig. 1 einzusteckende Dosierkammer mit Ein- und Auslaufloch sowie Drehflügel, im Längsschnitt;
Fig. 3   ein Dosiergerät mit Dosiergehäuse und darin
         drehbar eingesetzter Dosierkammer nach Fig.
         1 und 2 in der relativen Drehstellung mit
         geöffnetem Dosierkammerzulauf;
Fig. 4   ein Dosiergerät entsprechend Fig. 3, jedoch
         in der relativen Drehstellung mit zur Dek-
         kung gebrachten Ablauflöchern von Dosier-
         gehäuse und Dosierkammer;
Fig. 5   der Drehflügel in Stellung AUF, d.h. in der
         Stellung, in der die Dosierkammer zu entleeren ist;
Fig. 6   den Drehflügel in Stellung ZU, d.h. in der
         Stellung, in der die Dosierkammer aus dem
         Vorratsbehälter nachzufüllen ist; und
Fig. 7   die Dosierkammer im Querschnitt mit An-
         schlagnocken und Abdichtsteg des Lüftungs-
         lochs.

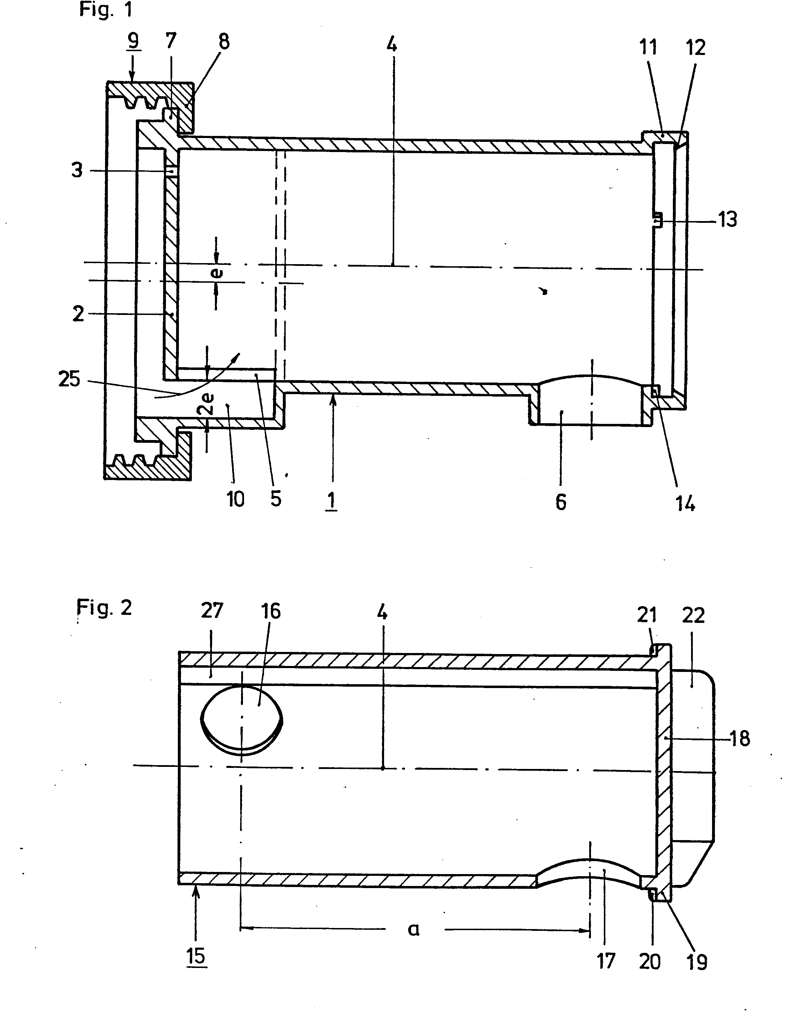

Das in Fig. 1 dargestellte und insgesamt mit 1 bezeichnete Gehäuse des erfindungsgemäßen Dosiergeräts ist im wesentlichen zylindrisch und besitzt an dem dem in Fig. 1
nicht dargestellten Flüssigkeitsbehälter zuzuwendenden
Längsende einen Deckel 2 mit einem Lüftungsloch 3. Das

• • •

D 7196                    6

zylindrische Gehäuse 1 besitzt außerdem im wesentlichen in einer durch die Gehäuselängsachse 4 gehenden Ebene zwei Umfangslöcher, nämlich eine Zulauföffnung 5 und eine Ablauföffnung 6.

Im Bereich des Deckels 2 wird das Gehäuse 1 mit einer Kupplung zum Anschließen des Dosiergeräts an einen Flüssigkeitsbehälter ausgestattet. Die Kupplung kann beispielsweise aus einem radialen Flansch 7 am Gehäuseumfang und einer Überwurfmutter 8 bestehen. Der Öffnungsdurchmesser der insgesamt mit 9 bezeichneten Kupplung ist um einen Betrag 2e größer als der Durchmesser des zylindrischen Gehäuses 1, wobei mit e die Exzentrizität von Kupplung 9 und Gehäuse 1 bezeichnet wird. Wegen der Exzentrizität ist in dem dem Lüftungsloch diametral gegenüberliegenden sichelförmigen Bereich der Kupplung 9 und des Umfangs des Gehäuses 1 Platz für einen Kanal 10 als Verbindung zwischen dem Behälterinnern und dem Innern des Dosiergehäuses 1 für den Fall, daß der Zulauf 5, 6 geöffnet ist.

Das Gehäuse 1 besitzt ferner an seinem dem Deckel 2 gegenüberliegenden Längsende einen Führungsring 11 mit Haltewulst 12 zum drehbaren Befestigen, insbesondere Einrasten, der in das Gehäuse 1 einzusetzenden Dosierkammer nach Fig. 2. Schließlich können in dem Ring 11 Anschlagnocken 13 und 14 vorgesehen werden, die der Stellung ZU (Nocken 13) und der Stellung AUF (Nocken 14) entsprechen.

In Fig. 2 wird die insgesamt mit 15 bezeichnete Dosierkammer schematisch dargestellt. Die Dosierkammer 15 besitzt eine Zulauföffnung 16 und eine Ablauföffnung 17. Die Öffnungen 16 und 17 besitzen in Richtung der Längsachse 4 denselben Abstand wie Zulauf und Ablauf 5 bzw. 6 des Ge-

. . .

D 7196                              7

häuses 1. In Umfangsrichtung der im wesentlichen ebenfalls zylindrischen Dosierkammer 15 werden Zulauf 16 und Ablauf 17 jedoch so weit gegeneinander versetzt, daß Zu- und Ablauf 16, 17 der Dosierkammer 15 nur entweder mit dem Zulauf 5 oder mit dem Ablauf 6 des Gehäuses 1 zur Deckung kommen können. Der Umfangswinkel zwischen den Anschlagnocken 13 und 14 in der Führungsrinne 11 nach Fig. 1 entspricht dem Umfangswinkel zwischen Zulauföffnung 16 und Ablauföffnung 17 der Dosierkammer 15. Diese besitzt einen nach der Montage dem Deckel 2 gegenüberliegenden Boden 18 mit über den Zylinderumfang der Dosierkammer 15 radial überstehendem Flansch 19. Bei der Montage ist der Flansch 19 in der Führungsrinne 11 des Gehäuses hinter dem Haltewulst 12 einzuschnappen. Auf der den Anschlagnocken 13 und 14 in der Führungsrinne 11 zugewendeten Fläche des Flansches 19 werden Gegennocken 20 und 21 für die Stellungen AUF und ZU vorgesehen. Auf die Außenseite des Bodens 18 wird zweckmäßig ein Drehflügel 22 aufgesetzt, insbesondere angeformt. Der Drehflügel 22 dient dazu, die Dosierkammer 15 bei Betrieb relativ zum Gehäuse 1 in die Stellung AUF oder in die Stellung ZU zu schwenken.

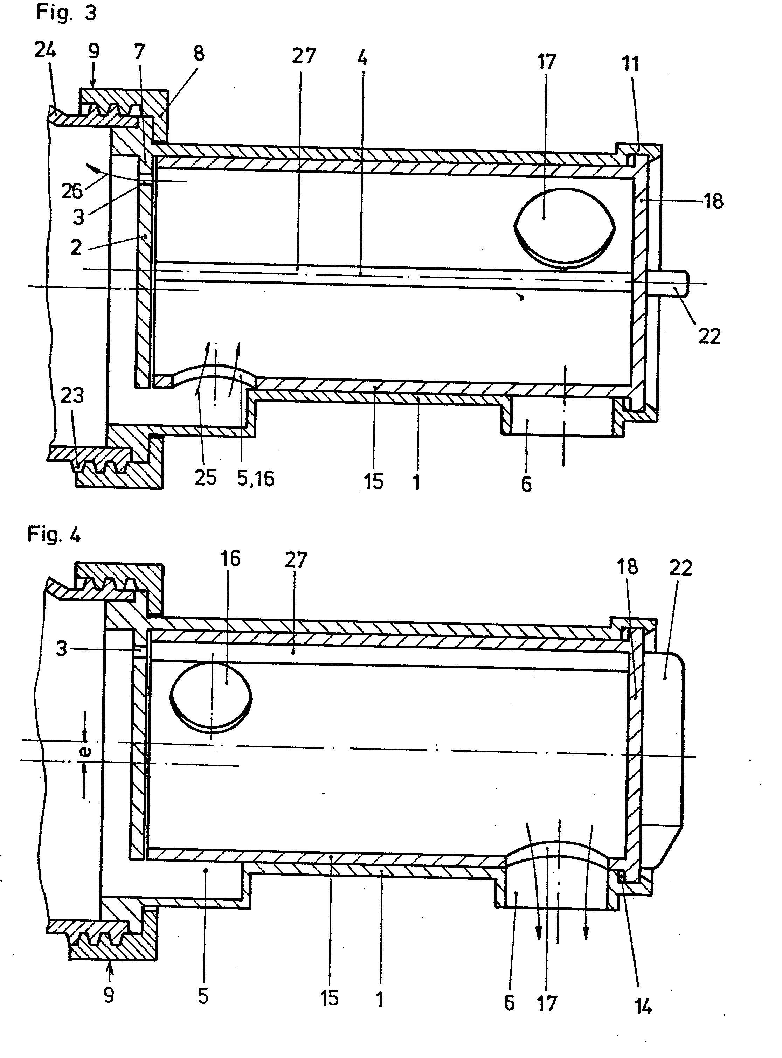

Bei der Montage wird die Dosierkammer 15 in Richtung der Längsachse 4 in das Gehäuse 1 so weit eingeschoben, bis der Flansch 19 hinter dem Haltewulst 12 einschnappt. Zum Vorbereiten des Dosierens wird das Dosiergerät mit Hilfe seiner Kupplung 9, z.B. mit Hilfe der den Flansch 7 erfassenden Überwurfmutter 8 auf das Mündungsgewinde 23 eines Flüssigkeitsbehälters 24 aufgeschraubt. In der Relativstellung nach Fig. 3, in der sich die Zulauföffnungen 5 und 16 von Gehäuse 1 und Dosierkammer 15 decken, kann Flüssigkeit in Pfeilrichtung 25 aus dem Behälter 24 in die Dosierkammer 15 einfließen. In dieser als Dosierstellung bezeichneten relativen Position von Gehäuse 1 und Dosierkammer 15 ist das Lüftungsloch 3 im Deckel 2 des Gehäuses 1 geöffnet. Dem in Pfeilrichtung 25 in die Dosierkammer 15 einfließenden Flüssigkeitsvolumen entsprechend kann daher ein entsprechendes Luftvolumen in Pfeilrichtung 26 in den Behälter 24 hinein nachfließen. Auf diese Weise ist es möglich, die Dosierkammer 15 vollständig aus dem Flüssigkeitsbehälter 24 zu füllen. Wenn die Dosierkammer 15 gefüllt ist, endet der Dosiervorgang. Bei Ausbildung der Wandung von Gehäuse und Dosierkammer vollständig oder teilweise aus durchsichtigem oder durchscheinendem Material, kann das Ende der Dosierung mit dem bloßen Auge beobachtet werden.

Wenn fertig dosiert ist, kann die Dosierkammer 15 relativ zum Gehäuse mit Hilfe des Drehflügels 22 so weit verdreht werden, daß ein Rückfließen der dosierten Flüssigkeit über den Zulauf 5 bzw. 16 nicht möglich ist, aber die Entnahmestellung mit zur Deckung gebrachten Ablauföffnungen 6, 17 noch nicht erreicht wird.

Fig. 4 zeigt die Relativstellung von Gehäuse 1 und Dosierkammer 15, in denen sich die Ablauföffnungen 6, 17 decken. In dieser Entnahmestellung wird außerdem das Entlüftungsloch 3 des Gehäusedeckels 2 mit einem auf der der Ablauföffnung 17 diametral gegenüberliegenden Innenfläche der Dosierkammer 15 angeordneten Steg 27 abgedeckt, derart, daß bei der Entnahme der im Dosiergerät befindlichen Flüssigkeit eine Verbindung zum Innern des Flüssigkeitsbehälters 24 auch nicht über das Lüftungsloch 3 besteht.

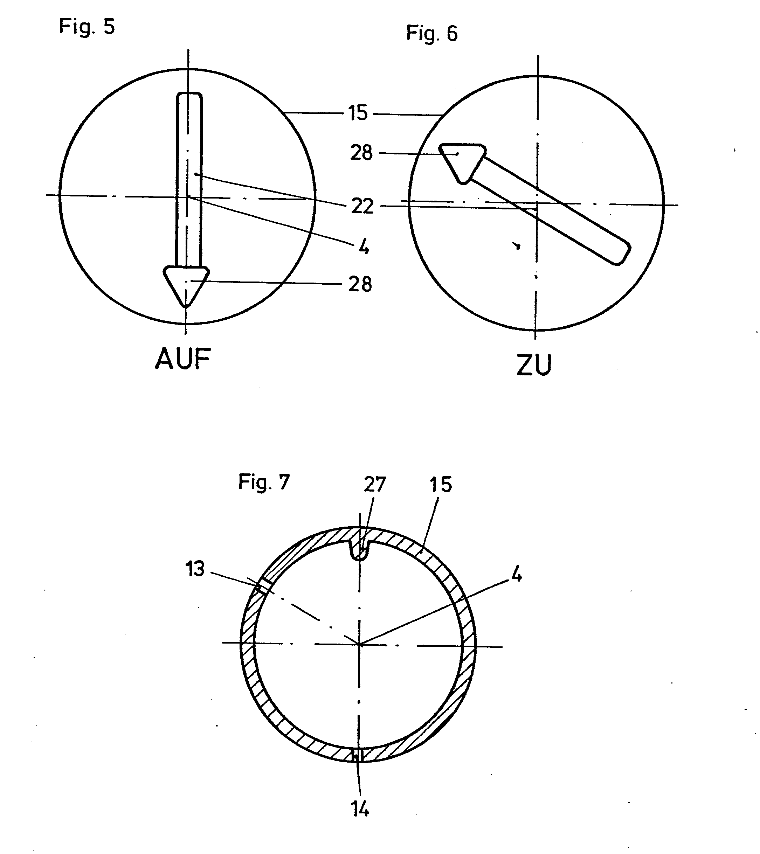

In den Fig. 5 und 6 werden die der Entnahmestellung (Dosierer AUF) bzw. der Dosierstellung (Dosierer ZU) entsprechenden Schwenkpositionen des Drehflügels 22 schema-

...

D 7196                    9

tisch dargestellt. In der Entnahmestellung nach Fig. 5 zeigt der mit dem Drehflügel 22 verbundene Anzeigepfeil 28 nach unten, in Richtung auf die Ablauföffnung 6 des Gehäuses 1. Durch Rechtsdrehung der Dosierkammer 15 gelangt der Drehflügel 22 aus der Position nach Fig. 5 in diejenige nach Fig. 6, wobei die Anschlagnocken 13 und 21 (Fig. 1 und 2) zusammenstoßen. Durch diese Relativdrehung werden zugleich die Lüftung 3 und durch Deckung der Öffnungen 5 und 16 der Zulauf freigegeben. Nach dem Dosieren kann der Drehflügel 22 durch Linksdrehung aus der Stellung nach Fig. 6 in diejenige nach Fig. 5 bis zum Aufeinanderstoßen der Anschlagnocken 14 und 20 geschwenkt werden, so daß zugleich der Auslauf mit den Öffnungen 6 und 17 geöffnet und das Lüftungsloch 3 mit Hilfe des Stegs 27 geschlossen werden.

D 7196

<u>Bezugszeichenliste</u>

1 = Gehäuse

2 = Deckel

3 = Lüftungsloch

4 = Längsachse (1)

5 = Zulauf (1)

6 = Ablauf (1)

7 = Flansch

8 = Überwurfmutter

9 = Kupplung

10 = Kanal

11 = Führungsring

12 = Haltewulst

13 = Anschlagnocke ZU

14 = Anschlagnocke AUF

15 = Dosierkammer

16 = Zulauf (15)

17 = Ablauf (15)

18 = Boden (15)

19 = Flansch (15)

20 = Gegennocken AUF

21 = Gegennocken ZU

22 = Drehflügel

23 = Gewinde

24 = Behälter

25 = Pfeil

26 = Pfeil

27 = Steg


a = Abstand

e = Exzentrizität

Patentanmeldung

**Henkel** KGaA
ZR-FE/Patente

D 7196                                    10

P a t e n t a n s p r ü c h e

1. Dosiergerät zum Ankoppeln an einen Flüssigkeitsbehälter (24) mit einem im wesentlichen zylindrischen Gehäuse (1) und einer darin drehbar gelagerten Dosierkammer (15), ferner mit je einem Zulauf (5, 16) und einem Ablauf (6, 17) von Gehäuse (1) und Dosierkammer (15), wobei die Zulauflöcher (5, 16) und die Ablauflöcher (6, 17) durch Relativdrehen von Gehäuse (1) und Dosierkammer (15) gegenläufig bzw. alternativ zu öffnen sind und mit einer Entlüftungsöffnung an der Dosierkammer sowie mit einer Kupplung (9) zum Ansetzen an den Flüssigkeitsbehälter (24), d a d u r c h   g e k e n n z e i c h n e t, daß das einen Zylindermantel und einen dem Flüssigkeitsbehälter (24) zugewandten Deckel (2) umfassende Gehäuse (1) zwei den Zu- bzw. Ablauf bildende Löcher (5, 6) mit axialem Abstand (a) im Zylindermantel sowie ein eine Entlüftungsverbindung zum Flüssigkeitsbehälter (24) bildendes Loch (3) im Deckel (2) besitzt, daß die einen drehbar im Gehäuse (1) gelagerten Zylindermantel und einen dem Flüssigkeitsbehälter (24) abgewandten Boden (18) aufweisende Dosierkammer (15) ebenfalls zwei als Zu- bzw. Ablauf dienende Löcher (16, 17) mit axialem Abstand (a) im Zylindermantel sowie ein mit dem Loch (3) der Entlüftungsverbindung zur Deckung zu bringendes Abdichtmittel (27) besitzt, daß Zulauf und Ablauf von Gehäuse (1) bzw. Dosierkammer (15) sowie die Abdichtmittel (27) der Dosierkammer so in Umfangsrichtung gegeneinander versetzt angeordnet sind, daß entweder die Zuläufe (5, 16) oder die Abläufe (6, 17) durch Relativdrehung zur Deckung zu bringen sind und bei Öffnung des Ablaufs die Entlüftungsverbindung verschlossen ist, und daß die zum Ansetzen des Gehäuses (1) an den Flüssigkeitsbehälter (24) dienende Kupplung (9)

...

einen Verbindungskanal (10) zwischen dem Behälterinnern und dem Gehäusezulauf (5) aufweist.

2. Dosiergerät nach Anspruch 1, dadurch gekennzeichnet, daß als Kupplung (9) zum Ansetzen des Gehäuses (1) an den Flüssigkeitsbehälter (24) eine mit einem radial gerichteten Umfangsflansch (7) des Gehäuses (1) zusammenwirkende, auf die jeweilige Behältermündung aufzusetzende Überwurfmutter (8) oder dergleichen vorgesehen ist.

3. Dosiergerät nach Anspruch 1 oder 2, dadurch gekennzeichnet, daß der Öffnungsdurchmesser der Kupplung (23) des Flüssigkeitsbehälters (24) wesentlich größer als der Zylinderdurchmesser des daran anzukuppelnden Gehäuses (1) ist und daß der Verbindungskanal (10) zwischen Flüssigkeitsbehälter (24) und Gehäusezulauf (5) - in axialer Richtung - über die Zylinderoberfläche führt.

4. Dosiergerät nach Anspruch 3, dadurch gekennzeichnet, daß das Gehäuse (1) exzentrisch (e) in Bezug auf seine Behälterkupplung (9) ausgebildet ist.

5. Dosiergerät nach einem oder mehreren der Ansprüche 1 bis 4, dadurch gekennzeichnet, daß das Gehäuse (1) an dem seinem Deckel (2) axial gegenüberliegenden Längsende ein Kupplungsmittel, insbesondere einen Führungsring (11) mit Schnappwulst (12), zum drehbaren Festhalten der eingesetzten Dosierkammer (15) besitzt.

6. Dosiergerät nach einem oder mehreren der Ansprüche 1 bis 5, dadurch gekennzeichnet, daß die Dosierkammer (15) an der Außenseite ihres Bodens (18) einen Drehflügel (22) zum Vorgeben der Dosierstellung oder der Entnahmestellung besitzt.

Patentanmeldung

**Henkel** KGaA
ZR-FE/Patente

D 7196                    12

7. Dosiergerät nach einem oder mehreren der Ansprüche 1
bis 6, dadurch gekennzeichnet, daß sich das Lüftungsloch
(3) am Rande des Deckels (2) etwa diametral gegenüber
der Zulauföffnung (5) des Gehäuses (1) befindet.

8. Dosiergerät nach einem oder mehreren der Ansprüche 1
bis 7, dadurch gekennzeichnet, daß die Dosierkammer (15)
auf ihrer Innenfläche einen Steg (27) besitzt, der dem
Ablauf (17) der Dosierkammer diametral gegenüberliegt
und der das Entlüftungsloch (3) im Gehäusedeckel (2) beim
zur Deckungkommen der Auslauföffnungen (6, 17) verschließt.

9. Dosiergerät nach einem oder mehreren der Ansprüche 1
bis 8, dadurch gekennzeichnet, daß die Zulauf- und Ablauföffnungen (5, 6) des Gehäuses (1) im wesentlichen in
einer durch die Gehäuseachse (4) gehenden Ebene liegen.

Fig. 1

Fig. 2

Fig. 3

Fig. 4

Fig. 5

Fig. 6

15

28

22

4

28

AUF

ZU

Fig. 7    27    15

13

4

14